# EUROPÄISCHE PATENTSCHRIFT

(11) **EP 2 735 887 B1**
(45) Veröffentlichungstag und Bekanntmachung des Hinweises auf die Patenterteilung: **03.06.2015**
(21) Anmeldenummer: 12193838.5
(22) Anmeldetag: 22.11.2012
(51) Int. Cl.: G01V 8/10, G01S 17/42, G01S 17/89

(54) **Optische Erfassungsvorrichtung**
Optical recording device
Dispositif d'enregistrement optique

(43) Veröffentlichungstag der Anmeldung: 28.05.2014
(73) Patentinhaber: SICK AG, 79183 Waldkirch/Breisgau (DE)
(72) Erfinder: Hammes, Markus, Dr., 79104 Freiburg (DE)
(74) Vertreter: Manitz, Finsterwald & Partner GbR

(56) Entgegenhaltungen:
- EP-A1- 2 466 328
- EP-A1- 2 469 296
- EP-A2- 1 992 961
- AT-A4- 510 296
- US-A1- 2005 219 506

## Beschreibung

Die Erfindung betrifft eine optische Erfassungsvorrichtung, insbesondere einen Laserscanner.

Eine solche Erfassungsvorrichtung ist aus EP 2 469 296 A1 bekannt. Die betreffende Vorrichtung ist dazu ausgebildet, während eines einen Scanwinkel überstreichenden Scans Sendepulse in verschiedenen in einer Scanrichtung aufeinander folgenden Richtungen auszusenden und die Empfangssignale einer Gruppe von Sendepulsen zur Erzeugung eines gemittelten Empfangssignals zu mitteln.

Das durch eine solche Mehrpulsauswertung erzeugte, gemittelte Empfangssignal, welches auch als Histogramm bezeichnet wird, weist statistisch eine deutlich höhere Qualität auf als die einzelnen Empfangssignale, so dass abhängig von der Mittelungstiefe auch bei einem geringen Signal-Rauschverhältnis der einzelnen Empfangssignale eine eindeutigere Aussage über das Vorhandensein eines Objekts in dem von der Gruppe von Sendepulsen abgedeckten Scanwinkelbereich getroffen werden kann. Dadurch ist es möglich, mit geringen Sendeleistungen und einfachen Sende- und Empfangskomponenten zu arbeiten, wodurch der erforderliche Bauraum und somit die minimal erreichbare Größe der Erfassungsvorrichtung sowie die Kosten für deren Herstellung reduziert werden.

Auch wenn das Vorhandensein eines Objekts in dem von der Gruppe von Sendepulsen abgedeckten Scanwinkelbereich anhand des gemittelten Empfangssignals zuverlässig erkennbar ist, lässt sich keine verlässliche Aussage über die räumliche Erstreckung eines solchen Objekts innerhalb des jeweiligen Scanwinkelbereichs treffen.

Eine solche Klassifizierung bzw. Unterscheidung erkannter Objekte nach Objektgröße ist für bestimmte Anwendungen aber vorteilhaft. So besteht beispielsweise bei Sicherheitsanwendungen ein Interesse, ein in dem Erfassungsbereich vorhandenes Objekt mit einer Ausdehnung, dessen Größe der Größenordnung des von der Gruppe von Sendepulsen abgedeckten Scanwinkelbereichs entspricht, von einem deutlich kleineren und für die Sicherheitsanwendung gegebenenfalls irrelevanten Objekt, wie beispielsweise einem Staubkorn, zu unterscheiden. Ebenso kann eine Identifizierung von schmalen Gegenstandskanten erwünscht sein.

Bei bekannten Vorrichtungen ist die Auflösung in Bezug auf die Objektgröße durch die Größe des durch eine Gruppe von Sendepulsen jeweils abgedeckten Scanwinkelbereichs beschränkt. Die große Überlappung zwischen den Sendepulsen einer Gruppe führt dabei dazu, dass unabhängig von der Größe eines in dem abgedeckten Scanwinkelbereich vorhandenen Objekts eine ähnliche Anzahl von Sendepulsen der Gruppe zumindest bereichsweise auf dem jeweiligen Objekt zu liegen kommen. Die Sendepulse erzeugen dabei für große und kleine Objekte näherungsweise identische Empfangspulse in ihrem jeweiligen Empfangssignal, so dass große und kleine Objekte auch anhand der daraus erzeugten gemittelten Empfangssignale nicht zuverlässig unterscheidbar sind.

AT 510 296 A4 beschreibt ein Verfahren zur Entfernungsmessung mittels Laserimpulsen, bei dem mehrere Sendepulse nacheinander in einen Erfassungsbereich gesendet werden und die jeweils zurückkehrende Strahlung empfangen wird. Ein Empfangssignal wird erzeugt, welches vom zeitlichen Verlauf der zurückkehrenden Strahlung des Sendepulses abhängt. Zur Erzeugung eines Empfangssignales eines Sendepulses wird ein aus der zurückkehrenden Strahlung des Sendepulses erzeugtes Signal zeitlich abgetastet und ein gemitteltes Empfangssignal gebildet, das eine Vielzahl von gemittelten Abtastwerten umfasst.

US 2005/0219506 A1 offenbart eine als Mehrebenen-Scanner ausgebildete Erfassungsvorrichtung für ein Fahrzeug mit mehreren in vertikaler Richtung aufeinander folgenden Scanebenen, wobei innerhalb jeder Scanebene jeweils mehrere Laserlichter in horizontaler Richtung aufeinander folgend ausgesendet werden. Während eines Kalibrierungs- oder Einlernprozesses wird eine vertikale Winkelabweichung zwischen einer vorbestimmten Scanebene und einer bestimmten absoluten vertikalen Fahrzeughöhe bestimmt. Dazu wird die in der Scanebene oberhalb und unterhalb der vorbestimmten Scanebene jeweils durchschnittlich empfangene Strahlungsintensität ermittelt, welche durch Mittelung der Intensitäten einer Mehrzahl von Laserlichtern ermittelt werden kann.

EP 1 992 961 A2 beschreibt eine optische Erfassungsvorrichtung, bei der Laserspots überlappen, um den Beleuchtungsfüllfaktor des überstrichenen Bereiches zu erhöhen, wozu ein kürzerer Pulsabstand eingestellt werden kann.

Die Aufgabe der Erfindung besteht darin, eine optische Erfassungsvorrichtung und ein Verfahren zur Detektion von Objekten mit einer optischen Erfassungsvorrichtung anzugeben, mit denen eine zuverlässige Detektion von Objekten und zugleich eine zuverlässige und genaue Aussage hinsichtlich der Ausdehnung der Objekte möglich ist. Insbesondere soll es ermöglicht werden, zwischen Objekten, die eine bestimmte Mindestgröße aufweisen, und deutlich kleineren Objekten, wie beispielsweise Staubkörnern oder schmalen Kanten von Gegenständen, zu unterscheiden. Die Vorrichtung soll zudem auf kleinem Bauraum realisierbar und kostengünstig herstellbar sein.

Die Aufgabe wird durch eine optische Erfassungsvorrichtung mit den Merkmalen des Anspruchs 1 und ein Verfahren mit den Merkmalen des Anspruchs 9 gelöst.

Die in den Ansprüchen genannten mehreren Sendepulse werden dabei in der vorliegenden Beschreibung auch als Gruppe von Sendepulsen bezeichnet.

Es wurde erkannt, dass bei der Verwendung von Sendepulsen mit einer großen Winkelausdehnung bzw. Spotgröße und dementsprechend großer Überlappung benachbarter Sendepulse in dem Erfassungsbereich auch bei Objekten mit einer kleinen Ausdehnung eine unverändert hohe Anzahl von Sendepulsen an den Objekten reflektiert wird, so dass anhand des gemittelten Empfangssignals keine Unterscheidung zwischen größeren und kleineren Objekten möglich ist. Demgegenüber führt die erfindungsgemäße Vorrichtung zu gemittelten Empfangssignalen, die sich abhängig von der Ausdehnung eines erfassten Objekts signifikant unterscheiden, so dass eine Unterscheidung zwischen ausgedehnteren und kleineren Objekten trotz der vorhandenen Rauscheinflüsse zuverlässig möglich ist.

Durch die geringe Ausdehnung bzw. Spotgröße der Sendepulse im Vergleich zu dem Winkelabstand zweier aufeinander folgender Sendepulse wird eine im Vergleich zu dem Stand der Technik deutlich verringerte Überlappung zwischen den Sendepulsen einer Gruppe in dem Erfassungsbereich bewirkt. Wenn beispielsweise die Sendepulse in gleichbleibenden Winkelabständen zueinander ausgesendet werden, kann durch das anspruchsgemäße Größenverhältnis erreicht werden, dass ein Sendepuls der Gruppe mit höchstens 20 weiteren Sendepulsen der Gruppe überlappt. Bei Vorhandensein eines kleinen Objekts, dessen Ausdehnung z.B. in der Größenordnung des Winkelabstands zweier Sendepulse liegt, trifft somit nur eine geringe Anzahl von zum Beispiel höchstens 20 Sendepulsen auf das Objekt und wird zurückreflektiert, während ein Teil der Sendepulse der Gruppe vollständig an dem Objekt vorbei schießt. Die geringere Anzahl an Reflexionen im Vergleich zu einem größeren Objekt lässt sich in dem gemittelten Empfangssignal zuverlässig feststellen, z.B. anhand einer verringerten Amplitude einer im Zuge der Signalauswertung in der nachstehend genauer erläuterten Weise aus den Reflexionen erzeugten Signalschwingung, so dass eine zuverlässige Unterscheidung zwischen kleinen und großen Objekten möglich ist.

Vorteilhafte Ausführungsformen der Erfindung sind in den Unteransprüchen, der Beschreibung und den Figuren beschrieben.

Gemäß weiteren Ausführungsformen ist die auf den Scanwinkel bezogene Winkelausdehnung zumindest eines Sendepulses der Gruppe in einem innerhalb des Erfassungsbereichs gelegenen Abstand von der Erfassungsvorrichtung höchstens fünfzehnmal so groß, bevorzugt höchstens zehnmal so groß, weiter bevorzugt höchstens fünfmal so groß, weiter bevorzugt höchstens dreimal so groß oder weiter bevorzugt höchstens zweimal so groß wie der auf den Scanwinkel bezogene Winkelabstand zwischen zwei in Scanrichtung unmittelbar benachbarten Sendepulsen der Gruppe. Die Anzahl der auf ein kleines Objekt fallenden Sendepulse kann dadurch noch weiter verringert werden, so dass anhand des gemittelten Empfangssignals eine noch zuverlässigere Unterscheidung bzw. Klassifizierung nach großen und kleinen Objekten möglich ist.

Erfindungsgemäß überlappt der Querschnitt zumindest eines Sendepulses der Gruppe in einem innerhalb des Erfassungsbereichs gelegenen Abstand von der Erfassungsvorrichtung mit höchstens einem Viertel der übrigen Sendepulse der Gruppe. Dadurch wird gewährleistet, dass sich die Anzahl der auf ein kleines Objekt treffenden Sendepulse einer Gruppe insbesondere von der Anzahl der Sendepulse signifikant unterscheidet, die auf ein Objekt treffen, dessen Größe in der Größenordnung des von der Gruppe von Sendepulsen abgedeckten Scanwinkelbereichs oder darüber liegt. Um eine noch zuverlässigere bzw. noch feingliedrigere Unterscheidung zwischen großen und kleinen Objekten zu ermöglichen, kann der Querschnitt des Sendepulses in dem be- trachteten Abstand von der Erfassungsvorrichtung mit höchstens 20 %, bevorzugt höchstens 15 %, weiter bevorzugt höchstens 10 %, weiter bevorzugt höchstens 5 % oder weiter bevorzugt höchstens 3 % der übrigen Sendepulse eine Überlappung aufweisen. Die absolute Anzahl der Sendepulse, mit dem zumindest ein Sendepuls der Gruppe in einem innerhalb des Erfassungsbereichs gelegenen Abstand eine Überlappung aufweist, kann beispielsweise höchstens 20, bevorzugt höchstens 15, weiter bevorzugt höchstens 10, weiter bevorzugt höchstens 5, weiter bevorzugt höchstens 3 oder weiter bevorzugt höchstens 2 betragen.

Die erfindungsgemäße Erfassungsvorrichtung ist dazu eingerichtet, einen Spitzenwert des gemittelten Empfangssignals zu ermitteln und auszuwerten, um daraus die Größe eines erfassten Objekts innerhalb eines von der Gruppe abgedeckten Scanwinkelbereichs zu bestimmen. Bei dem Spitzenwert des gemittelten Empfangssignals kann es sich um ein Maximum oder ein Minimum des gemittelten Empfangssignals handeln. Der Spitzenwert kann insbesondere ein Maximum oder Minimum einer Schwingung sein, welche in dem gemittelten Empfangssignal durch ein erkanntes Objekt infolge der nachstehend genauer erläuterten, eine Schwingungsanregung umfassenden Signalauswertung erzeugt wird und welche aus einer oder mehreren Schwingungsperioden besteht. Der Spitzenwert kann auch durch eine auf einen Mittelwert der Schwingung bezogene Amplitude der Schwingung gebildet sein.

Der Spitzenwert des gemittelten Empfangssignals kann mit zumindest einem vorgegebenen Wert verglichen werden, um die Größe des Objekts zu bestimmen und das erkannte Objekt insbesondere anhand des Über- oder Unterschreitens des vorgegebenen Werts in eine von zumindest zwei vorgegebenen Klassen einzuteilen. Beispielsweise kann der Abstand des Spitzenwerts von einem vorbestimmten oberen oder unteren Grenzwert ermittelt werden, wobei das Erreichen oder annähernde Erreichen des oberen und/oder unteren Grenzwerts auf das Vorhandensein eines sich über den gesamten von der Sendepulsgruppe abgedeckten Scanwinkelbereich erstreckenden Objekts hindeutet. Der Spitzenwert des Empfangssignals kann auch mit mehreren verschiedenen vorgegebenen Werten verglichen werden, um die erkannten Objekte in mehr als zwei Größenklassen einzuteilen.

Gemäß einer Ausführungsform werden Objekterkennungen, die ein Objekt mit einer Größe unterhalb einer bestimmten Mindestgröße anzeigen, verworfen. Beispielsweise kann die optische Erfassungsvorrichtung als sicherheitsgerichtete Vorrichtung ausgebildet sein, welche den Erfassungsbereich im Rahmen einer Sicherheitsfunktion auf das Eintreten von Objekten überprüft und zum Beispiel beim Eintreten eines Objekts einer bestimmten Mindestgröße ein Sicherheitssignal ausgibt, während kleinere Objekte als nicht sicherheitskritisch angesehen und im Rahmen der Sicherheitsfunktion ignoriert werden können, um unnötige Sicherheitsmaßnahmen zu vermeiden.

Vorzugsweise ist die optische Erfassungsvorrichtung dazu eingerichtet, das gemittelte Empfangssignal als zeitaufgelöstes Signal zu erzeugen und insbesondere dazu, anhand des gemittelten Empfangssignals den Abstand eines erfassten Objekts von der Erfassungsvorrichtung nach dem Lichtlaufzeitprinzip zu bestimmen. Hierzu wird bei der Auswertung des gemittelten Empfangssignals vorzugsweise bestimmt, zu welchem Zeitpunkt bzw. in welchem zeitlichen Abstand von der Aussendung eines Sendepulses von einem Objekt zurückgeworfene Strahlung des Sendepulses empfangen wird, d.h. ein Objekt in dem gemittelten Empfangssignal in Erscheinung tritt. Mit Hilfe der Lichtgeschwindigkeit kann dann aus dem zeitlichen Abstand auf die örtliche Distanz des Objekts geschlossen werden.

Um ein Objekt bzw. dessen Größe oder Abstand von der Erfassungsvorrichtung zu bestimmen, kann die Erfassungsvorrichtung einen oder mehrere zeitliche Abschnitte des gemittelten Empfangssignals identifizieren, die eine für ein erfasstes Objekt charakteristische Signalform besitzen. Abhängig von der im Rahmen der Erzeugung des gemittelten Empfangssignals durchgeführten Signalverarbeitung kann ein Objekt in dem gemittelten Empfangssignal beispielsweise als eine Schwingung des gemittelten Empfangssignals mit einer oder insbesondere mehreren Schwingungsperioden in Erscheinung treten, wobei ein Mittelwert der Schwingung vorzugsweise einem Erwartungswert des gemittelten Empfangssignals in Abwesenheit eines Objekts entspricht. Ein für die Bestimmung des Abstands des Objekts von der Erfassungsvorrichtung maßgeblicher Zeitpunkt in dem gemittelten Empfangssignal kann beispielsweise anhand des Anschwingzeitpunkts der das Objekt darstellenden Schwingung oder des ersten oder eines weiteren Spitzenwerts oder Mittelwertdurchgangs der Schwingung oder einer Kombination aus diesen bestimmt werden.

Die vorstehend beschriebene Differenzierbarkeit von verschieden großen Objekten ermöglicht auch die Erkennung von mehreren in Senderichtung hintereinander angeordneten Objekten und die Unterscheidung solcher Objekte von einem einzigen Objekt. Wenn zwei Objekte in Senderichtung hintereinander angeordnet sind und in Senderichtung einen geringen Abstand voneinander aufweisen, kann der Fall eintreten, dass sich die Zeitabschnitte des gemittelten Empfangssignals, die die beiden hintereinander angeordneten Objekte anzeigen bzw. von diesen beeinflusst werden, zeitlich miteinander überlappen bzw. unmittelbar ineinander übergehen. Wenn die Objekte in dem Scanwinkelbereich verschiedene Ausdehnungen besitzen, führt dies zu unterschiedlichen Spitzenwerten der den jeweiligen Objekten zugeordneten Signalabschnitte, so dass sich die beiden Signalabschnitte anhand der verschiedenen Spitzenwerte unterscheiden lassen und das Vorhandensein zweier bzw. mehrerer Objekte anstatt eines einzigen Objekts erkennbar ist. So lassen sich auch Konturen von Gegenständen erkennen wie beispielsweise Kanten, die einen in Senderichtung zurückversetzten Bereich eines Gegenstands begrenzen. Bevorzugt ist die Erfassungsvorrichtung zu diesem Zweck dazu eingerichtet, zu erkennen, wenn in dem gemittelten Empfangssignal mehrere jeweils das Vorhandensein eines Objekts anzeigende Signalabschnitte vorhanden sind, die insbesondere unterschiedliche Spitzenwerte aufweisen.

Zum Empfangen der zurückkehrenden Strahlung der Sendepulse und zur Erzeugung der Empfangssignale weist die optische Erfassungsvorrichtung vorzugsweise eine Empfangseinheit auf, welche eine Empfangsoptik wie z.B. eine Empfangslinse umfassen kann. Die Empfangsoptik fokussiert die empfangene Strahlung z.B. auf ein für die Strahlung empfindliches Empfangselement, welches die Strahlung in ein elektrisches Signal umwandelt und beispielsweise eine Fotodiode wie z.B. eine Lawinenfotodiode (APD) umfasst. Das Empfangselement kann dazu ausgebildet sein, ein elektrisches Signal zu erzeugen, welches im Wesentlichen proportional zu dem Verlauf der Intensität oder Leistung der eintreffenden Strahlung ist, für die das Empfangselement empfindlich ist. Das ursprünglich erzeugte Empfangssignal ist der stets positiven Strahlungsintensität entsprechend vorzugsweise ein unipolares Signal.

Gemäß einer vorteilhaften Ausführungsform ist die Erfassungsvorrichtung dazu eingerichtet, zur Erzeugung des Empfangssignals eines Sendepulses ein aus der zurückkehrenden Strahlung des Sendepulses erzeugtes unipolares Signal, insbesondere ein wie vorstehend beschriebenes ursprüngliches Empfangssignal, in ein bipolares Signal umzuwandeln. Dazu wird beispielsweise ein Filter eingesetzt, welches durch das ursprüngliche Empfangssignal zu einer Schwingung angeregt wird. Das Filter kann einen Schwingkreis, einen Bandpassfilter oder ein Differenzierglied enthalten und insbesondere zur Erzeugung eines analogen bipolaren Signals ausgebildet sein. Durch die Erzeugung des bipolaren Signals wird die Robustheit der nachfolgenden Signalauswertung erhöht. Die aus diesen Signalen erzeugten gemittelten Empfangssignale sind im Hinblick auf ihre Spitzenwerte besonders leicht, zuverlässig und robust auswertbar.

Gemäß einer weiteren Ausführungsform ist die Erfassungsvorrichtung dazu eingerichtet, zur Erzeugung des Empfangssignals eines Sendepulses ein aus der zurückkehrenden Strahlung des Sendepulses erzeugtes Signal zu quantisieren, insbesondere zur Erzeugung eines binärwertigen Signals. Das zu quantisierende Signal ist vorzugsweise durch ein gemäß der vorstehenden Beschreibung erzeugtes bipolares Empfangssignal gebildet. Durch die Quantisierung werden die Signalamplituden der einzelnen Empfangssignale auf gleiche, normierte Werte gebracht und somit vereinheitlicht, so dass sich das Erscheinen eines Objekts in einem Empfangssignal stets mit einer einheitlichen Gewichtung in dem gemittelten Empfangssignal niederschlägt. Infolge der Quantisierung kann das gemittelte Empfangssignal derart erzeugt werden, dass der Wert des gemittelten Empfangssignals zumindest zu bestimmten Zeitpunkten der Summe der einzelnen Empfangssignale bzw. Sendepulse entspricht, die zu dem betreffenden Zeitpunkt eine Objektdetektion bzw. einen das Vorhandensein eines Objekts anzeigende Signalform aufweisen.

Für die Quantisierung kann die Erfassungsvorrichtung einen Begrenzungsverstärker aufweisen, welcher selektiv alle Signalwerte oberhalb oder unterhalb einer Schwelle, beispielsweise alle positiven oder negativen Signalanteile, auf einen Sättigungswert des Verstärkers verstärkt. Die vorstehend beschriebenen Schritte der Signalerzeugung, der Bipolarisierung und der Quantisierung erfolgen, sofern vorgesehen, jeweils bevorzugt im zeitkontinuierlichen analogen Bereich.

Erfindungsgemäß ist die Erfassungsvorrichtung dazu eingerichtet, zur Erzeugung des Empfangssignals eines Sendepulses ein aus der zurückkehrenden Strahlung des Sendepulses erzeugtes Signal zeitlich abzutasten. Das abzutastende Signal ist dabei vorzugsweise durch ein gemäß der vorstehenden Beschreibung erzeugtes quantisiertes Signal gebildet. Durch die Abtastung wird eine zeitaufgelöste Aufzeichnung des zeitlichen Verlaufs des Signals erzeugt, wobei jeder Abtastwert den Wert des abgetasteten Signals zu dem jeweiligen Abtastzeitpunkt angibt. Im Zuge der Abtastung kann eine Analog/Digital-Wandlung des Signals erfolgen, wobei z.B. ein A/D-Wandler eingesetzt wird, der insbesondere als Binarisierer ausgebildet ist und ein binäres digitales Empfangssignal erzeugt. Angesichts der vorzugsweise bereits im analogen Bereich erfolgten Binarisierung kann der A/D-Wandler so abgestimmt werden, dass die beiden analogen Binärwerte des analogen Signals jeweils auf einen der digitalen Werte "0" und "1" des digitalen Empfangssignals abgebildet werden.

Erfindungsgemäß umfasst das gemittelte Empfangssignal eine Vielzahl von gemittelten Abtastwerten, die jeweils einen gemittelten Wert der einander zeitlich entsprechenden Abtastwerte der Empfangssignale der Sendepulse der Gruppe von Sendepulsen darstellen. Bei der Mittelung werden diejenigen Abtastwerte zusammengefasst, die den gleichen Abstand von der Erfassungsvorrichtung darstellen, das heißt die in demselben zeitlichen Abstand von der Aussendung des zu dem jeweiligen Empfangssignal gehörenden Sendepulses ermittelt worden sind bzw. aus der bis zu diesem Zeitpunkt empfangenen Strahlung des Sende- pulses erzeugt worden sind. Unter einer Mittelung ist hierin prinzipiell nicht nur eine Mittelwertbildung im streng mathematischen Sinn zu verstehen, sondern eine Zusammenfassung mehrerer Abtastwerte bzw. Empfangssignale, welche die in den Empfangssignalen enthaltenen, durch die zurückkehrende Strahlung der Sendepulse erzeugten Nutzsignalanteile gegenüber den enthaltenen Rauschsignalanteilen statistisch gesehen verstärkt. Beispielsweise können zur Erzeugung der Abtastwerte des gemittelten Empfangssignals jeweils die entsprechenden Abtastwerte der einzelnen Empfangssignale addiert werden.

Zur Aussendung der Sendepulse kann ein Sendeemitter vorgesehen sein, welcher eine aktive Emissionsfläche mit einer maximalen Ausdehnung zwischen 1 und 10 µm und bevorzugt zwischen 1,5 und 6 µm aufweist. Eine solche Emissionsfläche eignet sich besonders zur Erzeugung von Sendepulsen mit einer geringen Spotgröße. Der Sendeemitter kann zur Aussendung von Laserstrahlung ausgebildet sein, insbesondere in Form von Gaußschen Strahlen. Prinzipiell kann aber auch andere elektromagnetische Strahlung eingesetzt werden. Die Ausdehnung eines Sendepulses ist durch die 1/e²-Ausdehnung des Strahls begrenzt und folglich durch die äußere Kontur des senkrecht zur Hauptstrahlachse betrachteten Querschnitts beschränkt, bei der die Intensität der Strahlung gegenüber ihrem auf den Querschnitt bezogenen maximalen Wert auf einen Wert von 1/e² (13,5 %) abgefallen ist. Ferner kann die Erfassungsvorrichtung eine Sendeoptik umfassen, die das durch den Sendeemitter erzeugte Licht bündelt und dazu beispielsweise eine Kollimationslinse umfasst.

Der Sendeemitter kann aufgrund der durch die Mehrpulsauswertung erreichten höheren Zuverlässigkeit auch mit einer geringeren Leistung und einer relativ geringen Pulsdauer, dafür aber gegebenenfalls mit einer hohen Pulswiederholrate arbeiten. Beispielsweise kann die optische Spitzenleistung eines Sendepulses zwischen 0,4 W und einigen 10 W, beispielsweise bis zu 20, 40 oder 80 W liegen. Die Pulsdauer eines Einzelpulses kann im Bereich von 4 ns liegen. Die Pulswiederholrate kann zwischen 0,5 und 10 MHz liegen. Durch diese hohe Wiederholfrequenz wird eine hohe Winkelauflösung der optischen Erfassungsvorrichtung bei gleichzeitig hoher Mittelungstiefe der gemittelten Empfangssignale und dementsprechend hoher Zuverlässigkeit der Objektdetektion erreicht.

Um eine für die zuverlässige Objektdetektion ausreichende Mittelungstiefe zu erreichen, kann eine Gruppe von Sendepulsen aus wenigstens 40 und bevorzugt aus wenigstens 50 Sendepulsen bestehen. Beispielsweise kann die Gruppe wenigstens 60, 70, 80 oder 90 Sendepulse aufweisen. Um bei einer Abtastung des Scanwinkels mit mehreren aufeinander folgenden Gruppen von Sendepulsen eine ausreichende Winkelauflösung zu erzielen, kann die Anzahl der Sendepulse der Gruppe z.B. auf bis zu 200, bis zu 150, bis zu 120 oder bis zu 100 Pulse beschränkt sein.

Gemäß einer vorteilhaften Ausführungsform ist die Erfassungsvorrichtung dazu eingerichtet, mehrere Gruppen von Sendepulsen auszusenden und aus den Empfangssignalen der Sendepulse einer Gruppe jeweils ein gemitteltes Empfangssignal zu erzeugen. Die Empfangssignale der Sendepulse und das gemittelte Empfangssignal jeder Gruppe lassen sich dabei in der vorstehend beschriebenen Weise erzeugen.

Die Sendepulse verschiedener Gruppen werden vorzugsweise in verschiedenen Richtungen in den Erfassungsbereich ausgesendet. Vorzugsweise deckt jede Gruppe einen durch die Senderichtungen ihrer Sendepulse definierten Scanwinkelbereich ab, wobei die Scanwinkelbereiche mehrerer Gruppen zusammen den gesamten Scanwinkelbereich abdecken und sich ganz oder teilweise überlappen oder überlappungsfrei aneinander anschließen. Bevorzugt besteht eine Gruppe aus zeitlich unmittelbar aufeinander folgend ausgesendeten Pulsen ohne dazwischen ausgesendete gruppenfremde Pulse. Prinzipiell kann aber zwischen zwei Sendepulsen einer Gruppe auch ein Sendepuls einer anderen Gruppe ausgesendet werden. Beispielsweise ist es möglich, dass während eines Zeitabschnitts jeder n-te Sendepuls einer Gruppe zugeordnet wird und die zeitlich dazwischen ausgesendeten n-1 Pulse weiteren Gruppen zugeordnet werden.

Der gesamte Scanwinkel wird somit durch Gruppen von Sendepulsen abgetastet, die jeweils einen Teil des Scanwinkels abdecken. Aus dem gemittelten Empfangssignal einer Gruppe kann dabei bei Erkennung eines Objekts in der vorstehend beschriebenen Weise ein Entfernungsmesswert für das Objekt erzeugt werden. Aus den Entfernungsmesswerten der verschiedenen Gruppen lässt sich ein zweidimensionales ortsaufgelöstes Bild des Erfassungsbereichs erzeugen, welches die in dem Erfassungsbereich befindlichen Objekte und insbesondere deren Position in Bezug auf den Scanwinkel und deren Abstand von der Erfassungsvorrichtung enthält. Die Positionsgenauigkeit in Bezug auf den Scanwinkel ist dabei durch die Anzahl und Anordnung der Gruppen von Sendepulsen vorgegeben. Zusätzlich ist die optische Erfassungsvorrichtung dazu in der Lage, in der vorstehend beschriebenen Weise Objekte, deren Winkelausdehnung in der Größenanordnung des von einer Gruppen von Sendepulsen abgedeckten Scanwinkelbereichs ist, von deutlich kleineren Objekten, wie beispielsweise einzelnen Staubpartikeln, zu unterscheiden.

Gemäß einer vorteilhaften Ausführungsform ist die Erfassungsvorrichtung dazu eingerichtet, zu erkennen, wenn die gemittelten Empfangssignale mehrerer benachbarter Gruppen von Sendepulsen jeweils das Vorhandensein eines Objekts anzeigen. In diesem Fall kann mit hoher Wahrscheinlichkeit angenommen werden, dass die Detektionen von einem zusammenhängenden Objekt stammen, das von Sendepulsen verschiedener Gruppen getroffen wird. Die Gesamtausdehnung des Objekts bestimmt sich dann daran, wie viele benachbarte Gruppen von Sendepulsen von dem Objekt überspannt werden. Der Rand des Objekts wird sich typischerweise im Inneren eines durch eine Gruppe von Sendepulsen abgedeckten Scanwinkelbereichs befinden, so dass das Empfangssignal dieser Sendepulsgruppe eine Ausdehnung des Objekts nur über einen Teil des durch die Sendepulsgruppe abgedeckten Scanwinkelbereichs anzeigt. Durch die Bestimmung der genauen Winkelausdehnung des ausgedehnten Objekts innerhalb des Scanwinkelbereichs der jeweiligen Sendepulsgruppe anhand des jeweiligen gemittelten Empfangssignals wird eine besonders genaue Lokalisierung von Objektkanten ermöglicht.

Gemäß einer vorteilhaften Ausführungsform weist die Vorrichtung eine um eine Rotationsachse rotierend bewegliche Ablenkeinheit auf, mit der die Sendepulse in den Erfassungsbereich lenkbar sind. Die Richtung eines Sendepulses ist dabei durch die Winkelstellung der Ablenkeinheit während der Aussendung des Sendepulses vorgegeben, so dass die zeitlich aufeinander folgend ausgesendeten Sendepulse infolge der rotierenden Bewegung der Ablenkeinheit in verschiedene Richtungen ausgesendet werden, die in Scanrichtung aufeinander folgen. Dabei kann ein im Wesentlichen konstanter Winkelversatz zwischen den Richtungen zweier aufeinander folgend ausgesendeter Sendepulse realisiert werden, was zu einer gleichmäßigen Abtastung des Erfassungsbereichs führt.

Die optische Erfassungsvorrichtung kann eine oder mehrere Scanebenen aufweisen, in die die Sendepulse ausgesendet werden, um eine quasidreidimensionale Erfassung zu ermöglichen. Wenn die optische Erfassungsvorrichtung mehrere Scanebenen umfasst, gehören die Sendepulse einer Gruppe von Sendepulsen vorzugsweise jeweils zu derselben Scanebene, wobei prinzipiell aber auch eine Zusammenfassung von Sendepulsen aus mehreren Scanebenen in einer Gruppe möglich ist. Ein Scan der Erfassungsvorrichtung kann den größtmöglichen Scanwinkel von 360° abdecken, prinzipiell kann es sich aber auch um eine optische Erfassungsvorrichtung mit einem Scanwinkel von insgesamt weniger als 360°, beispielsweise 180° handeln. Der von einer Gruppe von Sendepulsen abgedeckte Scanwinkelbereich kann beispielsweise etwa 0,1° betragen.

Die vorstehend beschriebene Spezifikation des Verhältnisses der Winkelausdehnung eines Sendepulses einer Gruppe zu dem Winkelabstand zweier benachbarter Sendepulse der Gruppe und/oder die Spezifikation der Anzahl der mit dem Querschnitt des Sendepulses überlappenden Sendepulse der Gruppe wird von dem betreffenden Sendepuls vorzugsweise in jedem innerhalb des Erfassungsbereichs gelegenen Abstand von der Erfassungsvorrichtung erfüllt. Der Erfassungsbereich ist dabei der Bereich, in dem eine Objektdetektion mit der optischen Erfassungsvorrichtung möglich ist und erstreckt sich beispielsweise von einer in dem Strahlengang angeordneten äußeren Frontscheibe der Vorrichtung bis zu dem von der Frontscheibe aus gemessenen maximalen Abstand von der optischen Erfassungsvorrichtung, in dem eine Objektdetektion mit der Vorrichtung unter normalen Bedingungen gerade noch möglich ist. Beispielsweise kann der Sendepuls die jeweilige Spezifikation bzw. Spezifikationen zumindest über einen Abstandsbereich von 0 m bis zum Beispiel etwa 5,5 m erfüllen.

Ferner ist es bevorzugt, wenn die im Vorstehenden beschriebene Spezifikation des Verhältnisses der Winkelausdehnung eines Sendepulses relativ zu dem Winkelabstand zweier Sendepulse und/oder die Spezifikation der Anzahl der mit dem Querschnitt eines Sendepulses einer Gruppe überlappenden Sendepulse nicht nur von einem Sendepuls, sondern von mehreren und bevorzugt allen Sendepulsen einer Gruppe erfüllt wird und/oder von den Sendepulsen mehrerer und insbesondere aller Sendepulsgruppen. Der im Rahmen der obigen Spezifikation maßgebliche Winkelabstand zwischen zwei in Scanrichtung unmittelbar benachbarten Sendepulsen einer Gruppe ist dabei vorzugsweise durch den geringsten Winkelabstand zweier in Scanrichtung unmittelbar benachbarter Sendepulse der jeweiligen Gruppe gegeben, das heißt die Winkelausdehnung des Sendepulses ist z.B. höchstens zwanzigmal so groß wie der geringste Winkelabstand zweier Sendepulse dieser Gruppe.

Das erfindungsgemäße Verfahren kann unter Verwendung einer wie hierin beschriebenen erfindungsgemäßen optischen Erfassungsvorrichtung durchgeführt werden. Die vorstehend in Bezug auf die erfindungsgemäße optische Erfassungsvorrichtung beschriebenen vorteilhaften Ausführungsformen und Vorteile stellen bei entsprechender Anwendung vorteilhafte Ausgestaltungen und Vorteile des erfindungsgemäßen Verfahrens dar.

Nachfolgend wird die vorliegende Erfindung beispielhaft anhand vorteilhafter Ausführungsformen unter Bezugnahme auf die beigefügten Figuren beschrieben. Es zeigen:
- Fig. 1: eine optische Erfassungsvorrichtung gemäß einer Ausführungsform der Erfindung im Axialschnitt,
- Fig. 2: die optische Erfassungsvorrichtung von Fig. 1 mit ausgesendeten Sendepulsen von oben betrachtet,
- Fig. 3: durch die optische Erfassungsvorrichtung von Fig. 1 und 2 erzeugte Signalverläufe, und
- Fig. 4-7: jeweils ein mit einer Gruppe von Sendepulsen zu detektierendes Objekt (Fig. 4a, 5a, 6a, 7a) und ein entsprechendes gemitteltes Empfangssignal (Fig. 4b, 5b, 6b, 7b).

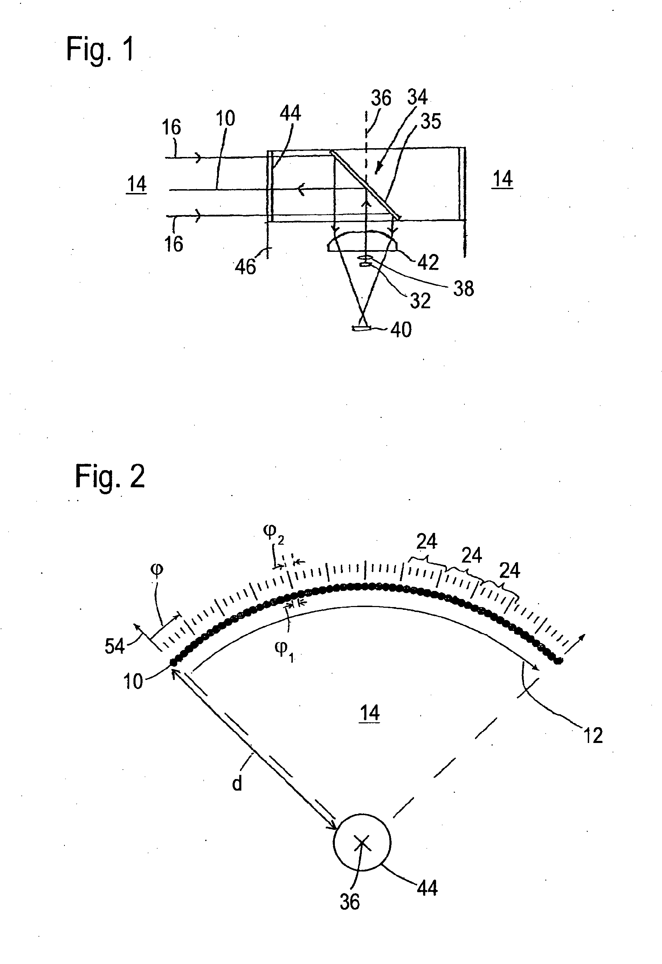

Fig. 1 zeigt eine schematische Darstellung einer als Laserscanner ausgebildeten optischen Erfassungsvorrichtung gemäß einer Ausführungsform der Erfindung im Axialschnitt.

Ein in dem Gehäuse 46 der Vorrichtung angeordneter Sendeemitter 32 sendet durch eine Sendelinse 38 Laserstrahlung aus, und zwar in Form von in regelmäßigen Zeitabständen aufeinander folgenden kurzen Sendepulsen 10. Die Sendepulse 10 werden durch eine Ablenkeinheit 34 mit einem um eine Drehachse 36 rotierenden und gegenüber der Achse 36 schräg stehenden Spiegel 35 in einen Erfassungsbereich 14 gelenkt, der von dem Laserscanner durch eine im vorliegenden Ausführungsbeispiel zylindermantelförmig ausgebildete und konzentrisch zu der Rotationsachse 36 angeordnete Frontscheibe 44 abgegrenzt ist. Durch den rotierenden Spiegel 35 werden die aufeinander folgend ausgesendeten Sendepulse 10 in eine durch die Rotationsrichtung um die Drehachse 36 vorgegebene Scanrichtung 12 (Fig. 2) abgelenkt und überstreichen somit im Zuge eines Umlaufs des Spiegels 35 den gesamten 360°-Scanwinkel. Die aus dem Erfassungsbereich 14 zurückkehrende Strahlung 16 eines Sendepulses 10 wird über den Spiegel 35 auf eine Empfangslinse 42 abgelenkt und durch die Empfangslinse 42 auf einem Empfangselement 40 gebündelt, welches ein von der eintreffenden Strahlung 16 abhängiges elektrisches Signal erzeugt. An das Empfangselement 40 ist eine nicht dargstellte Auswerteeinheit angeschlossen, die die nachfolgend beschriebene Signalverarbeitung und -auswertung durchführt.

Fig. 2 zeigt den Laserscanner von Fig. 1 in Richtung der Drehachse 36 betrachtet mit einer Vielzahl von in den Erfassungsbereich 14 ausgesendeten Sendepulsen 10. Die Sendepulse 10 werden in verschiedenen, in der Scanrichtung 12 aufeinander folgenden und jeweils mit einem relativ zu der Drehachse 36 definierten Scanwinkel ϕ korrespondierenden Richtungen 54 in den Erfassungsbereich 14 ausgesendet. In Fig. 2 sind die Sendepulse 10 dabei nur für ein 90°-Segment des im vorliegenden Ausführungsbeispiel einen vollen 360°-Umlauf umfassenden Scanwinkels ϕ gezeigt. Wie in Fig. 2 gezeigt wird der Erfassungsbereich 14 bzw. der Scanwinkel ϕ durch die diskreten Sendepulse 10 mit einer im Wesentlichen konstanten Schrittweite vollständig abgetastet.

Die Sendepulse 10 sind dabei in Gruppen 24 unterteilt, die jeweils mehrere unmittelbar aufeinander folgend ausgesendete und einen geschlossenen Scanwinkelbereich abdeckende Sendepulse 10 umfassen. Der Scanwinkel ϕ wird somit durch die Gruppen 24 von Sendepulsen 10 diskret abgetastet bzw. abgerastert, wobei die Schrittweite dieser Abtastung der Summe der Schrittweiten der Sendepulse 10 der Gruppe 24 entspricht. In der Realität kann eine Gruppe 24 deutlich mehr Sendepulse 10 aufweisen und einen kleineren Scanwinkelbereich abdecken als in Fig. 2 gezeigt.

In Fig. 2 sind die Sendepulse 10 jeweils durch ihren senkrecht zu der jeweiligen Senderichtung 54 betrachteten, im Wesentlichen kreisförmigen Strahlungsquerschnitt im Abstand d von der Erfassungsvorrichtung dargestellt. Wie in Fig. 2 ersichtlich, ist die auf den Scanwinkel ϕ bezogene Winkelausdehnung ϕ₁ eines Sendepulses 10 in dem dargestellten Ausführungsbeispiel etwa genauso groß wie der auf den Scanwinkel ϕ bezogene Winkelabstand ϕ₂ zweier in Scanrichtung 12 unmittelbar benachbarter, d.h. unmittelbar aufeinander folgend ausgesendeter Sendepulse 10.

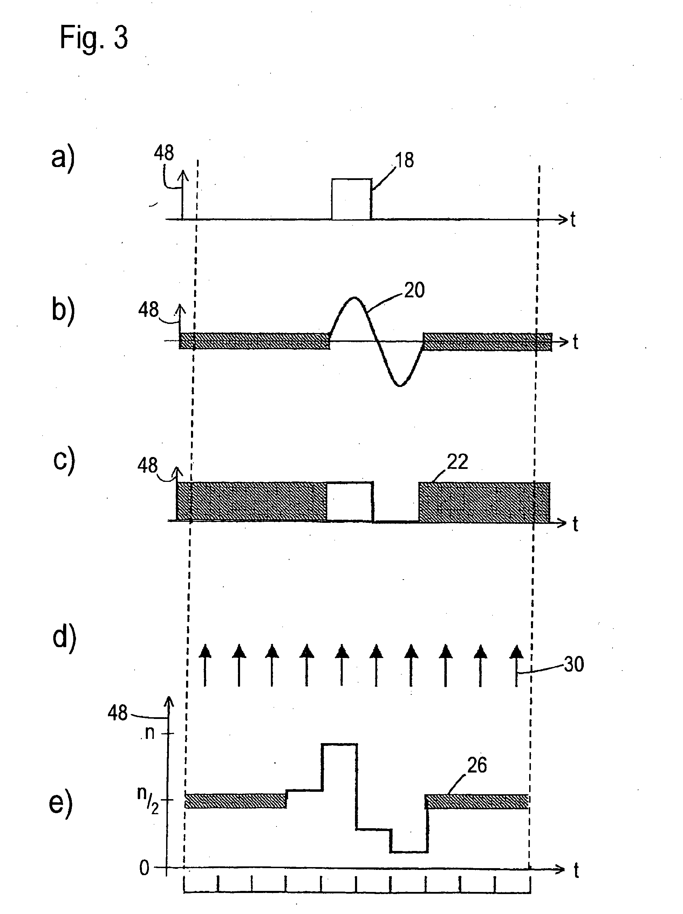

Fig. 3 zeigt beispielhafte, durch die in Fig. 1 und 2 gezeigte optische Erfassungsvorrichtung erzeugte Signalverläufe, wobei der Wert des Signals auf der vertikalen Achse 48 und die Zeit t auf der horizontalen Achse aufgetragen ist.

Fig. 3a zeigt das von dem Empfangselement 40 (Fig. 1) aus der zurückkehrenden Strahlung eines Sendepulses unmittelbar erzeugte Signal 18. Das Signal 18 enthält einen Empfangspuls zu einem Zeitpunkt, wobei der zeitliche Abstand des Auftretens des Empfangspulses von der Aussendung des Sendepulses der Lichtlaufzeit des Sendepulses von dem Laserscanner zu einem erfassten Objekt und zurück entspricht. Der Empfangspuls ist idealisiert als Rechteckpuls ohne Rauschanteile und Formverzerrungen dargestellt, welche in der Realität allerdings erheblich sein können. Prinzipiell kann der Laserscanner im Rahmen der Erfindung sogar so ausgebildet sein, dass das Signal 18 so stark verrauscht ist, dass der von einem Objekt stammende Empfangspuls in dem Signal 18 im Wesentlichen untergeht und anhand des Signals 18 alleine keine zuverlässige Objektdetektion möglich ist, da nicht zuverlässig zwischen einem Objekt und dem Rauschen unterschieden werden kann.

Das Signal 18 ist ein unipolares Signal. Dieses wird durch ein mit dem Empfangselement 40 verbundenes Filter in ein bipolares Signal 20 (Fig. 3b) umgewandelt, wobei in Fig. 3b der Einfachheit halber nur eine Schwingungsperiode der durch den Rechteckpuls des Signals 18 angeregten Schwingung gezeigt ist. Die neben der Schwingungsperiode dargestellten schraffierten Bereiche des Signals 20 repräsentieren das in dem Signal 20 vorhandene Rauschen.

Das Signal 20 wird einem Begrenzungsverstärker zugeführt, der daraus das Signal 22 (Fig. 2c) erzeugt und dabei selektiv die positiven Anteile des bipolaren Signals 20 bis in die Sättigung des Begrenzungsverstärkers hinein verstärkt, so dass die sinusförmige Schwingung des bipolaren Signals 20 in eine Rechteckwelle umgewandelt wird und das schraffiert dargestellte Rauschen über den gesamten Wertebereich des Signals 22 gedehnt wird. In dem Signal 22 sind folglich die positiven Werte des bipolaren Signals 20 auf einen Sättigungswert des Begrenzungsverstärkers abgebildet und die negativen Werte auf den Wert Null. Die vorstehende Signalauswertung erfolgt analog und zeitkontinuierlich, das heißt die auf der horizontalen Achse aufgetragene Zeit t entspricht der tatsächlichen Zeit.

Der zeitliche Verlauf des Signals 22 wird aufgezeichnet. Dazu wird das Signal 22 zeitlich abgetastet und dadurch zeitlich diskretisiert und gleichzeitig binär digitalisiert. Fig. 3d zeigt eine Folge von durch Pfeile dargestellten äquidistanten Abtastzeitpunkten 30, zu denen jeweils ein Abtastwert des Signals 22 ermittelt und aufgezeichnet wird. Die auf die Periodendauer der Schwingung des Signals 22 bezogene zeitliche Dichte der erhobenen Abtastwerte kann in der Praxis deutlich höher gewählt sein als in Fig. 3d gezeigt.

Die durch die Abtastung und Digitalisierung erzeugten Empfangssignale, die als Bitfolgen vorliegen, werden verwendet, um ein gemitteltes Empfangssignal 26 (Fig. 3e) zu erzeugen, welches auch als Histogramm bezeichnet werden kann. Das Histogramm 26 besteht dabei aus einer Vielzahl von Abtastwerten bzw. "Bins", die jeweils einen gemittelten Wert der einander zeitlich entsprechenden, das heißt in demselben zeitlichen Abstand von der Aussendung des jeweiligen Sendepulses ermittelten, Abtastwerten darstellen. Dafür ist für jedes Bin ein Akkumulator vorgesehen, der nur bei einem zugehörigen Bitwert "1" heraufgezählt wird. Bei idealen, unverrauschten Signalen würde in diesem Histogramm 26 nur dasjenige Bin bzw. diejenigen Bins gefüllt, über denen der positive Teil der Rechteckwelle des Signals 22 liegt. Der von dem Begrenzungsverstärker angehobene Rauschpegel füllt aber auch die übrigen Bins, wobei wegen der Zufälligkeit des Rauschens z.B. etwa jedes zweite Signal 22 bei einem solchen Bin einen positiven Wert aufweist.

Somit entspricht der Wert des gemittelten Empfangssignals 26 zu jedem Zeitpunkt t der Summe der Abtastwerte der in dem gemittelten Empfangssignal 26 zusammengefassten einzelnen Signale 22 bzw. deren abgetasteten Aufzeichnungen zu dem jeweiligen Zeitpunkt. Der Wert des gemittelten Signals 26 variiert somit zwischen dem Wert Null, wenn kein Empfangssignal zu dem jeweiligen Zeitpunkt einen Wert "1" aufweist und dem Wert n, wenn alle n Empfangssignale bei dem betreffenden Zeitpunkt einen Wert "1" aufweisen. Eine in den Signalen 22 jeweils vorhandene Rechteckwelle reproduziert sich in dem gemittelten Empfangssignal 26, wobei die positive Halbwelle der sich aus den Signalen 22 reproduzierenden Rechteckwelle in dem Signal 26 einen Spitzenwert von annähernd n annimmt und die negative Halbwelle der Rechteckwelle in dem Signal 26 einen Spitzenwert von annähernd Null annimmt. Die Abweichung der tatsächlichen Signalform von einer perfekten Rechteckwelle, die sich von Null bis n erstrecken würde, ist durch das Rauschen und eine geringfügige zeitliche Abweichung des Auftretens der Rechteckwelle in den einzelnen Signalen 22 zu erklären, welche zu einem zeitlichen Auseinanderlaufen der Rechteckwelle führt. Außerhalb der Rechteckwelle wird der Wert des Signals 26 durch das Rauschen in den Signalen 22 bestimmt, wobei der Erwartungswert des Signals 26 beispielsweise n/2 beträgt und das tatsächliche Signal 26 von dem Wert n/2 im Rahmen eines Rauschpegels abweicht wie in Fig. 3e durch schraffierte Signalbereiche veranschaulicht ist.

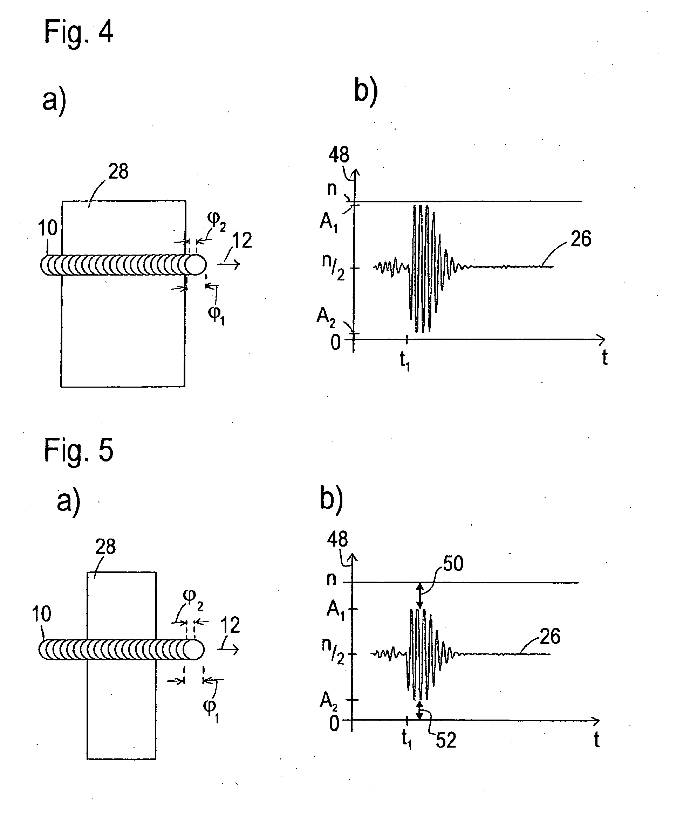

Fig. 4 bis 7 zeigen beispielhafte Objektdetektionen anhand eines gemittelten Empfangssignals 26, welches durch einen Laserscanner gemäß einer Ausführungsform der Erfindung in der vorstehend in Bezug auf Fig. 3 beschriebenen Weise erzeugt wird.

Fig. 4a zeigt ein in dem Erfassungsbereich angeordnetes Objekt 28 aus der Perspektive des Laserscanners und zusätzlich eine Gruppe von Sendepulsen 10, die auf das Objekt 28 treffen und bildlich durch ihren im Abstand des Objekts 28 von dem Laserscanner vorliegenden Querschnitt dargestellt sind. Wie in Fig. 4a gezeigt ist die Winkelausdehnung ϕ₁ der Sendepulse 10 jeweils nur etwa 2,5-mal so groß wie der auf den Scanwinkel ϕ bezogene Winkelabstand ϕ₂ zwischen zwei Sendepulsen 10.

Fig. 4b zeigt das aus den Empfangssignalen der Sendepulse 10 von Fig. 4a erzeugte gemittelte Empfangssignal 26. Das in Fig. 4b dargestellte Signal 26 weist dabei im Vergleich zu dem in Fig. 3e gezeigten Signal 26 eine größere Anzahl von Abtastwerten pro Schwingungsperiode auf, wodurch sich der annähernd kontinuierliche Verlauf des in Fig. 4b gezeigten Signals 26 ergibt. Das Objekt 28 ist in dem Signal 26 in Form von ausgeprägten Schwingungen sichtbar, wobei im Gegensatz zur Darstellung in Fig. 3e auch die mit der Zeit abklingenden Nachschwingungen dargestellt sind. In dem Signal 26 sind mehrere Schwingungsperioden mit einem Maximalwert A₁ und einem Minimalwert A₂ vorhanden, welche annähernd dem jeweiligen Grenzwert n und Null entsprechen, wobei die geringfügige Abweichung von diesen Grenzwerten davon herrührt, dass die am weitesten links und am weitesten rechts gelegenen Sendepulse 10 das Objekt 28 jeweils vollständig verfehlen und somit nicht zu einem Reflexpuls in dem entsprechenden Empfangssignal führen. Anhand der Spitzenwerte A₁, A₂ und deren Abweichung von den Grenzwerten n und Null kann somit erkannt werden, dass das Objekt 28 eine gegenüber dem durch die Gruppe abgedeckten Scanwinkelbereich geringfügig verringerte Winkelausdehnung besitzt. Die Größe des Objekts 28 kann somit im Rahmen einer durch das vorhandene Rauschen vorgegebenen Genauigkeit zuverlässig abgeschätzt werden.

Zudem kann der Abstand des Objekts 28 von der Erfassungsvorrichtung anhand des Anschwingzeitpunkts t₁ bestimmt werden, an dem das Objekt in dem Empfangssignal 26 sichtbar wird. Stattdessen könnte z.B. auch der Zeitpunkt des ersten oder eines späteren Durchgangs der Schwingung durch den Mittelwert n/2 gewählt werden, um den Objektabstand abzuschätzen.

Fig. 5a und b zeigen die in Fig. 4a und b gezeigte Situation bei Vorhandensein eines kleineren Objekts 28 in dem Erfassungsbereich. In Fig. 4b sind die Abstände 50, 52 der Spitzenwerte A₁, A₂ von den Grenzwerten n und Null kenntlich gemacht. Da aufgrund des kleineren Objekts 28, wie in Fig. 5a ersichtlich, eine größere Anzahl von Sendepulsen 10 das Objekt 28 verfehlt, ist die Amplitude der Schwingungen in Fig. 5b kleiner und die Abstände 50, 52 entsprechend größer als in dem in Fig. 4b gezeigten Empfangssignal 26. Durch Auswertung dieser Abstände 50, 52 kann zuverlässig erkannt werden, dass es sich um ein kleineres Objekt 28 handelt.

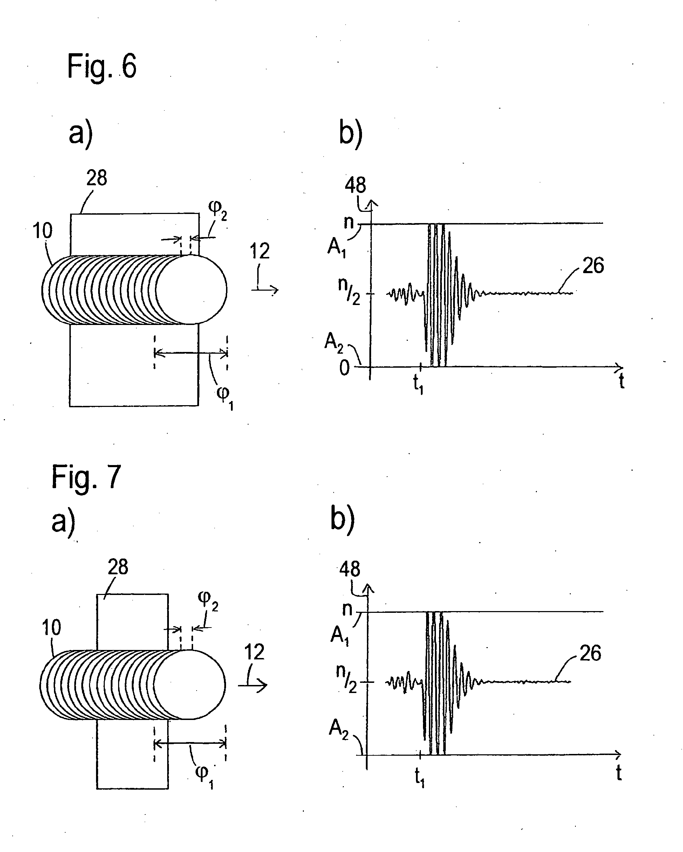

Fig. 6a und b zeigen die in Fig. 4a und b gezeigte Erfassungssituation unter Verwendung eines Laserscanners mit einer größeren Spotgröße der Sendepulse 10. Wie in Fig. 6a gezeigt, weisen die Sendepulse 10 eine Winkelausdehnung ϕ₁ auf, die in etwa zehnmal so groß ist wie der Winkelabstand ϕ₂ zweier benachbarter Sendepulse 10, so dass in Fig. 6a alle Sendepulse 10 auf das Objekt 28 treffen und die Spitzenwerte A₁, A₂ der das Objekt 28 darstellenden Schwingungen in dem gemittelten Empfangssignal 26 (Fig. 6b) mit den Grenzwerten n bzw. Null, ggf. bis auf eine geringfügige durch Rauschen hervorgerufene Abweichung, übereinstimmen.

Fig. 7a, b zeigt die in Fig. 6a, b dargestellte Erfassungssituation bei Vorhandensein des kleineren Objekts 28. Wie in Fig. 7a gezeigt, sind aufgrund der größeren Ausdehnung der Sendepulse 10 auch hier keine Sendepulse 10 vorhanden, die an dem Objekt 28 vollständig vorbeischießen. Das resultierende gemittelte Empfangssignal 26 (Fig. 7b) entspricht somit im Wesentlichen dem in Fig. 6b gezeigten Empfangssignal 26. Sobald allerdings ein noch kleineres Objekt auftritt, schießen auch bei der in Fig. 6 und 7 gezeigten Ausführungsform Sendepulse 10 vollständig an dem Objekt vorbei, was sich dann in dem entsprechenden Empfangssignal 26 durch eine Verringerung der Schwingungsamplituden bemerkbar macht. Auch die in Fig. 6 und 7 gezeigte Ausführungsform eignet sich somit zur Unterscheidung von ausgedehnten Objekten einerseits und sehr kleinen Objekten wie beispielsweise winzigen Staubkörnern andererseits.

### Bezugszeichenliste

- 10: Sendepuls
- 12: Scanrichtung
- 14: Erfassungsbereich
- 16: Rückstrahlung
- 18, 20, 22: Signal
- 24: Gruppe
- 26: gemitteltes Empfangssignal
- 28: Objekt
- 30: Zeitpunkt
- 32: Sendeemitter
- 34: Ablenkeinheit
- 35: Spiegel
- 36: Drehachse
- 38: Sendelinse
- 40: Empfangselement
- 42: Empfangslinse
- 44: Frontscheibe
- 46: Gehäuse
- 48: vertikale Achse
- 50, 52: Amplitudenabweichung
- 54: Richtung

- ϕ: Scanwinkel
- ϕ₁: Winkelausdehnung
- ϕ₂: Winkelabstand
- d: Abstand
- A₁, A₂: Spitzenwert
- n: Grenzwert
- t: Zeit
- t₁: Zeitpunkt

## Patentansprüche

1. Optische Erfassungsvorrichtung, insbesondere Laserscanner, zur Bestimmung der Ausdehnung eines erfassten Objekts oder dessen Klassifizierung nach der Größe, welche dazu ausgebildet ist,
- während eines einen Scanwinkel (ϕ) überstreichenden Scans nacheinander mehrere Sendepulse (10) in verschiedenen in einer Scanrichtung (12) aufeinander folgenden Richtungen (54) in einen Erfassungsbereich (14) auszusenden,
- die aus dem Erfassungsbereich (14) jeweils zurückkehrende Strahlung (16) der Sendepulse (10) zu empfangen,
- zu jedem Sendepuls (10) ein Empfangssignal zu erzeugen, welches von dem zeitlichen Verlauf der zurückkehrenden Strahlung (16) des Sendepulses (10) abhängt, und
- die Empfangssignale der mehreren Sendepulse (10) zu mitteln, um ein gemitteltes Empfangssignal (26) zu erzeugen,
wobei
- die Vorrichtung dazu eingerichtet ist, zur Erzeugung des Empfangssignals eines Sendepulses (10) ein aus der zurückkehrenden Strahlung (16) des Sendepulses (10) erzeugtes Signal (18, 20, 22) zeitlich abzutasten,
- das gemittelte Empfangssignal (26) eine Vielzahl von gemittelten Abtastwerten umfasst, die jeweils einen gemittelten Wert der einander zeitlich entsprechenden Abtastwerte der Empfangssignale der Sendepulse (10) der mehreren Sendepulse (10) darstellen,
- die Vorrichtung dazu eingerichtet ist, einen Spitzenwert (A1, A2) des gemittelten Empfangssignals (26) auszuwerten, um die Ausdehnung eines erfassten Objekts (28) in dem durch die Senderichtungen der mehreren Sendepulse definierten Scanwinkelbereich zu bestimmen, und
- die auf den Scanwinkel (ϕ) bezogene Winkelausdehnung (ϕ₁) jedes Sendepulses (10) der mehreren Sendepulse in einem innerhalb des Erfassungsbereichs (14) gelegenen Abstand (d) von der Erfassungsvorrichtung höchstens 20-mal so groß ist wie der auf den Scanwinkel (ϕ) bezogene Winkelabstand (ϕ₂) zwischen zwei in Scanrichtung (12) unmittelbar benachbarten Sendepulsen (10) der mehreren Sendepulse und der Querschnitt jedes Sendepulses (10) der mehreren Sendepulse in einem innerhalb des Erfassungsbereichs (14) gelegenen Abstand (d) von der Erfassungsvorrichtung mit höchstens einem Viertel der übrigen Sendepulse (10) der mehreren Sendepulse eine Überlappung aufweist.

2. Vorrichtung nach Anspruch 1,
**dadurch gekennzeichnet, dass** die Vorrichtung dazu eingerichtet ist, einen Spitzenwert (A₁, A₂) des gemittelten Empfangssignals (26) mit zumindest einem vorgegebenen Wert (n, 0) zu vergleichen.

3. Vorrichtung nach zumindest einem der vorstehenden Ansprüche,
**dadurch gekennzeichnet, dass** die Vorrichtung dazu eingerichtet ist, zu erkennen, wenn in dem gemittelten Empfangssignal (26) mehrere jeweils das Vorhandensein eines Objekts (28) anzeigende Signalabschnitte vorhanden sind, welche unterschiedliche Spitzenwerte (A₁, A₂) aufweisen.

4. Vorrichtung nach zumindest einem der vorstehenden Ansprüche,
**dadurch gekennzeichnet, dass** die Vorrichtung dazu eingerichtet ist, zur Erzeugung des Empfangssignals eines Sendepulses (10) ein aus der zurückkehrenden Strahlung (16) des Sendepulses (10) erzeugtes unipolares Signal (18) in ein bipolares Signal (20) umzuwandeln.

5. Vorrichtung nach zumindest einem der vorstehenden Ansprüche,
**dadurch gekennzeichnet, dass** die Vorrichtung dazu eingerichtet ist, zur Erzeugung des Empfangssignals eines Sendepulses (10) ein aus der zurückkehrenden Strahlung (16) des Sendepulses (10) erzeugtes Signal (18, 20) zu quantisieren, insbesondere zur Erzeugung eines binärwertigen Signals (22).

6. Vorrichtung nach zumindest einem der vorstehenden Ansprüche,
**dadurch gekennzeichnet, dass** ein Sendeemitter (32) zur Emission von Sendepulsen (10) vorgesehen ist, welcher eine aktive Ernissionsfläche mit einer Ausdehnung zwischen 1 und 10 µm und bevorzugt zwischen 1,5 und 6 µm aufweist.

7. Vorrichtung nach zumindest einem der vorstehenden Ansprüche,
**dadurch gekennzeichnet, dass** die mehreren Sendepulse (10) wenigstens 40 und bevorzugt wenigstens 50 Sendepulse (10) umfassen.

8. Vorrichtung nach zumindest einem der vorstehenden Ansprüche,
**dadurch gekennzeichnet dass** eine um eine Rotationsachse (36) rotierend bewegliche Ablenkeinheit (34) vorgesehen ist, mit der die Sendepulse (10) in den Erfassungsbereich (14) lenkbar sind, so dass die Richtung (54) eines Sendepulses (10) jeweils durch die Winkelstellung der Ablenkeinheit (34) während der Aussendung des Sendepulses (10) vorgegeben ist.

9. Verfahren zur Bestimmung der Ausdehnung von in einem Erfassungsbereich (14) angeordneten Objekten (28) oder deren Klassifizierung nach der Größe, mit einer optischen Erfassungsvorrichtung, die insbesondere nach zumindest einem der vorstehenden Ansprüche ausgebildet ist, bei dem
- während eines einen Scanwinkel (ϕ) überstreichenden Scans nacheinander mehrere Sendepulse (10) in verschiedenen in einer Scanrichtung (12) aufeinander folgenden Richtungen (54) in einen Erfassungsbereich (14) ausgesendet werden,
- die aus dem Erfassungsbereich (14) jeweils zurückkehrende Strahlung (16) der Sendepulse (10) empfangen wird,
- zu jedem Sendepuls (10) ein Empfangssignal erzeugt wird, welches von dem zeitlichen Verlauf der zurückkehrenden Strahlung (16) des Sendepulses (10) abhängt, und
- die Empfangssignale der mehreren Sendepulse (10) gemittelt werden, um ein gemitteltes Empfangssignal (26) zu erzeugen,
wobei
- zur Erzeugung des Empfangssignals eines Sendepulses (10) ein aus der zurückkehrenden Strahlung (16) des Sendepulses (10) erzeugtes Signal (18, 20, 22) zeitlich abgetastet wird,
- das gemittelte Empfangssignal (26) eine Vielzahl von gemittelten Abtastwerten umfasst, die jeweils einen gemittelten Wert der einander zeitlich entsprechenden Abtastwerte der Empfangssignale der Sendepulse (10) der mehreren Sendepulse (10) darstellen,
- ein Spitzenwert (A1, A2) des gemittelten Empfangssignals (26) ausgewertet wird, um die Ausdehnung eines erfassten Objekts (28) in dem durch die Senderichtungen der mehreren Sendepulse definierten Scanwinkelbereich zu bestimmen, und
- die auf den Scanwinkel (ϕ) bezogene Winkelausdehnung (ϕ₁) jedes Sendepulses (10) der mehreren Sendepulse in einem innerhalb des Erfassungsbereichs (14) gelegenen Abstand (d) von der Erfassungsvorrichtung höchstens 20-mal so groß ist wie der auf den Scanwinkel (ϕ) bezogene Winkelabstand (ϕ₂) zwischen zwei in Scanrichtung (12) unmittelbar benachbarten Sendepulsen (10) der mehreren Sendepulse und der Querschnitt jedes Sendepulses (10) der mehreren Sendepulse in einem innerhalb des Erfassungsbereichs (14) gelegenen Abstand (d) von der Erfassungsvorrichtung mit höchstens einem Viertel der übrigen Sendepulse (10) der mehreren Sendepulse eine Überlappung aufweist.

## Claims

1. An optical detection apparatus, in particular a laser scanner, for determining the extent of a detected object or its classification by size, which is configured
- to transmit a plurality of transmitted pulses (10) into a detection zone (14) after one another in different directions (54) following one another in a scanning direction (12) during a scan sweeping over a scanning angle (ϕ);
- to receive the radiation (16) of the transmitted pulses (10) respectively returning from the detection zone (14);
- to generate a received signal with respect to each transmitted pulse (10), said received signal depending on the time progression of the returning radiation (16) of the transmitted pulse (10); and
- to average the received signals of the plurality of transmitted pulses (10) to generate an averaged received signal (26),
wherein
- the apparatus is configured, for the generation of the received signal of a transmitted pulse (10), to sample in time a signal (18, 20, 22) generated from the returning radiation (16) of the transmitted pulse (10);
- the averaged received signal (26) comprises a plurality of averaged sampled values which each represent an averaged value of the sampled values corresponding to one another in time of the received signals of the transmitted pulses (10) of the plurality of transmitted pulses (10);
- the apparatus is configured to evaluate a peak value (A1, A2) of the averaged received signal (26) in order to determine the extent of a detected object (28) in the scan angle range defined by the transmission directions of the plurality of transmitted pulses; and
- the angular extent (ϕ₁) related to the scanning angle (ϕ) of each of the transmitted pulse (10) of the plurality of transmitted pulses at a spacing (d) from the detection apparatus disposed within the detection zone (14) is at most 20 times as large as the angular spacing (ϕ₂) related to the scanning angle (ϕ) between two transmitted pulses (10) of the plurality of transmitted pulses directly adjacent in the scanning direction (12); and the cross-section of each transmitted pulse (10) of the plurality of transmitted pulses at a spacing (d) from the detection apparatus disposed within the detection zone (14) has an overlap with at most one quarter of the remaining transmitted pulses (10) of the plurality of transmitted pulses.

2. An apparatus in accordance with claim 1,
**characterized in that**
the apparatus is adapted to compare a peak value (A₁, A₂) of the averaged received signal (26) with at least one predefined value (n, 0).

3. An apparatus in accordance with at least one of the preceding claims,
**characterized in that**
the apparatus is configured to recognize when a plurality of signal sections are present in the averaged received signal (26) which each indicate the presence of an object (28) and which have different peak values (A₁, A₂).

4. An apparatus in accordance with at least one of the preceding claims,
**characterized in that**
the apparatus is configured, for the generation of the received signal of a transmitted pulse (10), to convert a unipolar signal (18) generated from the returning radiation (16) of the transmitted pulse (10) into a bipolar signal (20).

5. An apparatus in accordance with at least one of the preceding claims,
**characterized in that**
the apparatus is configured, for the generation of the received signal of a transmitted pulse (10), to quantize a signal (18, 20) generated from the returning radiation (16) of the transmitted pulse (10), in partiuclar for generating a binary signal (22).

6. An apparatus in accordance with at least one of the preceding claims,
**characterized in that**
a transmission emitter (32) is provided for the emission of transmitted pulses (10) which has an active emission surface having an extent between 1 and 10 µm and preferably between 1.5 and 6 µm.

7. An apparatus in accordance with at least one of the preceding claims,
**characterized in that**
the plurality of transmitted pulses (10) comprise at least 40 and preferably at least 50 transmitted pulses (10).

8. An apparatus in accordance with at least one of the preceding claims,
**characterized in that**
a deflection unit (34) is provided which is rotatingly movable about an axis of rotation (36) and with which the transmitted pulses (10) can be directed into the detection zone (14) so that the direction (54) of a transmitted pulse (10) is respectively predefined by the angular position of the deflection unit (34) during the transmission of the transmitted pulse (10).

9. A method of detecting the extent of objects (28) arranged in a detection zone (14) or their classification by size using an optical detection apparatus which is in particular configured in accordance with at least one of the preceding claims, wherein
- a plurality of transmitted pulses (10) are transmitted into a detection zone (14) after one another in different directions (54) following one another in a scanning direction (12) during a scan sweeping over a scanning angle (ϕ);
- the radiation (16) of the transmitted pulses (10) respectively returning from the detection zone (14) is received;
- a received signal with respect to each transmitted pulse (10) is generated, said received signal depending on the time progression of the returning radiation (16) of the transmitted pulse (10); and
- the received signals of a plurality of transmission pulses (10) are averaged to generate an averaged received signal (26).
wherein,
- for the generation of the received signal of a transmitted pulse (10), a signal (18, 20, 22) generated from the returning radiation (16) of the transmitted pulse (10) is sampled in time;
- the averaged received signal (26) comprises a plurality of averaged sampled values which each represent an averaged value of the sampled values corresponding to one another in time of the received signals of the transmitted pulses (10) of the plurality of transmitted pulses (10);
- a peak value (A1, A2) of the averaged received signal (26) is evaluated in order to determine the extent of a detected object (28) in the scan angle range defined by the transmission directions of the plurality of transmitted pulses; and
- the angular extent (ϕ₁) related to the scanning angle (ϕ) of each transmitted pulse (10) of the plurality of transmitted pulses at a spacing (d) from the detection apparatus disposed within the detection zone (14) is at most 20 times as large as the angular spacing (ϕ₂) related to the scanning angle (ϕ) between two transmitted pulses (10) of the group (24) directly adjacent in the scanning direction (12), and the cross-section of each transmitted pulse (10) of the plurality of transmitted pulses at a spacing (d) from the detection apparatus disposed within the detection zone (14) has an overlap with at most one quarter of the remaining transmitted pulses (10) of the plurality of transmitted pulses.

## Revendications

1. Dispositif de détection optique, en particulier scanner à laser, pour déterminer l'extension d'un objet détecté ou sa classification d'après la taille, qui est réalisé pour
- pendant un scannage couvrant un angle de scannage (ϕ), émettre les unes après les autres plusieurs impulsions émises (10) dans différentes directions (54) successives dans une direction de scannage (12) dans une zone de détection (14),
- recevoir le rayonnement (16), des impulsions émises (10), respectivement en retour depuis la zone de détection (14),
- engendrer pour chaque impulsion émise (10) un signal de réception qui dépend du déroulement temporel du rayonnement (16) en retour, de l'impulsion émise (10), et
- faire la moyenne des signaux de réception desdites plusieurs impulsions émises (10) pour engendrer un signal de réception moyenné (26),
dans lequel
- le dispositif est organisé, afin d'engendrer le signal de réception d'une impulsion émise (10), pour palper temporellement un signal (18, 20, 22) engendré à partir du rayonnement en retour (16) de l'impulsion émise (10),
- le signal de réception moyenné (26) comprend une pluralité de valeurs de palpage moyennées, qui représentent chacune une valeur moyennée des valeurs de palpage, qui se correspondent dans le temps, des signaux de réception des impulsions émises (10) parmi lesdites plusieurs impulsions émises (10),
- le dispositif est organisé pour exploiter une valeur de pointe (A1, A2) du signal de réception moyenné (26), afin de déterminer l'extension d'un objet détecté (28) dans la plage angulaire de scannage définie par les directions d'émission desdites plusieurs impulsions émises, et
- l'extension angulaire (ϕ1), par référence à l'angle de scannage (ϕ), de chaque impulsion émise (10) parmi les plusieurs impulsions émises à une distance (d) située à l'intérieur de la zone de détection (14) depuis le dispositif de détection est au maximum 20 fois plus élevé que la distance angulaire (ϕ2), par référence à l'angle de scannage (ϕ), entre deux impulsions émises (10) immédiatement voisines en direction de scannage (12), parmi lesdites plusieurs impulsions émises, et la section transversale de chaque impulsion émise (10) parmi lesdites plusieurs impulsions émises à une distance (d) située à l'intérieur de la zone de détection (14) depuis le dispositif de détection présente un chevauchement avec au maximum un quart des impulsions émises (10) restantes parmi lesdites plusieurs impulsions émises.

2. Dispositif selon la revendication 1,
**caractérisé en ce que**
le dispositif est organisé pour comparer une valeur de pointe (A1, A2) du signal de réception moyenné (26) avec au moins une valeur prédéterminée (n, 0).

3. Dispositif selon l'une au moins des revendications précédentes,
**caractérisé en ce que**
le dispositif est organisé pour reconnaître, s'il existe dans le signal de réception moyenné (26) plusieurs portions de signal indiquant la présence d'un objet (28), lesquelles présentent des valeurs de pointe différentes (A1, A2).

4. Dispositif selon l'une au moins des revendications précédentes,
**caractérisé en ce que**
le dispositif est organisé, afin d'engendrer le signal de réception d'une impulsion émise (10), pour convertir un signal unipolaire (18) engendré à partir du rayonnement en retour (16) de l'impulsion émise (10) en un signal bipolaire (20).

5. Dispositif selon l'une au moins des revendications précédentes,
**caractérisé en ce que**
le dispositif est organisé, afin d'engendrer le signal de réception d'une impulsion émise (10), pour quantifier un signal (18, 20) engendré à partir du rayonnement en retour (16) de l'impulsion émise (10), en particulier pour engendrer un signal de valeur binaire (22).

6. Dispositif selon l'une au moins des revendications précédentes,
**caractérisé en ce que**
il est prévu un émetteur (32) pour l'émission des impulsions émises (10), celui-ci présentant une surface d'émission active avec une extension entre 1 et 10 µm et de préférence entre 1,5 et 6 µm.

7. Dispositif selon l'une au moins des revendications précédentes,
**caractérisé en ce que**
lesdites plusieurs impulsions émises (10) incluent au moins 40 et de préférence au moins 50 impulsions émises (10).

8. Dispositif selon l'une au moins des revendications précédentes,
**caractérisé en ce que**
il est prévu une unité de déflexion (34) mobile en rotation autour d'un axe de rotation (36), avec laquelle les impulsions émises (10) peuvent être dirigées vers la zone de détection (14), de sorte que la direction (54) d'une impulsion émise (10) est respectivement imposée par la position angulaire de l'unité de déflexion (34) pendant l'émission de l'impulsion émise (10).

9. Procédé pour déterminer l'extension d'objets (28) agencés dans une zone de surveillance (14) ou pour déterminer leur classification d'après la taille, comprenant un dispositif de détection optique, réalisé en particulier selon l'une au moins des revendications précédentes, dans lequel
- pendant un scannage couvrant un angle de scannage (ϕ), on émet les unes après les autres plusieurs impulsions émises (10) dans différentes directions (54) successives dans une direction de scannage (12) dans une zone de détection (14),
- on reçoit le rayonnement (16), des impulsions émises (10), respectivement en retour depuis la zone de détection (14),
- on engendre pour chaque impulsion émise (10) un signal de réception qui dépend du déroulement temporel du rayonnement (16) en retour, de l'impulsion émise (10), et
- on fait la moyenne des signaux de réception desdites plusieurs impulsions émises (10) pour engendrer un signal de réception moyenné (26),
dans lequel
- afin d'engendrer le signal de réception d'une impulsion émise (10), on palpe temporellement un signal (18, 20, 22) engendré à partir du rayonnement en retour (16) de l'impulsion émise (10),
- le signal de réception moyenné (26) comprend une pluralité de valeurs de palpage moyennées, qui représentent chacune une valeur moyennée des valeurs de palpage, qui se correspondent dans le temps, des signaux de réception des impulsions émises (10) parmi lesdites plusieurs impulsions émises (10),
- on exploite une valeur de pointe (A1, A2) du signal de réception moyenné (26), afin de déterminer l'extension d'un objet détecté (28) dans la plage angulaire de scannage définie par les directions d'émission desdites plusieurs impulsions émises, et
- l'extension angulaire (ϕ1), par référence à l'angle de scannage (ϕ), de chaque impulsion émise (10) parmi les plusieurs impulsions émises à une distance (d) située à l'intérieur de la zone de détection (14) depuis le dispositif de détection est au maximum 20 fois plus élevée que la distance angulaire (ϕ2), par référence à l'angle de scannage (ϕ), entre deux impulsions émises (10) immédiatement voisines en direction de scannage (12), parmi lesdites plusieurs impulsions émises, et la section transversale de chaque impulsion émise (10) parmi lesdites plusieurs impulsions émises à une distance (d) située à l'intérieur de la zone de détection (14) depuis le dispositif de détection présente un chevauchement avec au maximum un quart des impulsions émises (10) restantes parmi lesdites plusieurs impulsions émises.
